# EUROPÄISCHE PATENTSCHRIFT

(11) **EP 0 657 671 B1**
(45) Veröffentlichungstag und Bekanntmachung des Hinweises auf die Patenterteilung: **15.10.1997**
(21) Anmeldenummer: 94810688.5
(22) Anmeldetag: 02.12.1994
(51) Int. Cl.: F16L 3/10

(54) **Fixpunktbefestigung einer Rohrleitung an einer Gebäudewand**
Locating point fastening of a conduit at a wall
Attache d'un point de fixation d'un conduit sur une paroi

(30) Priorität: 08.12.1993 CH 3655/93
(43) Veröffentlichungstag der Anmeldung: 14.06.1995
(73) Patentinhaber: GEBERIT TECHNIK AG, CH-8645 Jona (CH)
(72) Erfinder: Gübeli, Albert, CH-8645 Jona (CH); Egli, Anton, CH-8739 Rieden (CH); Wili, Hansruedi, CH-8645 Jona (CH)
(74) Vertreter: Groner, Manfred

(56) Entgegenhaltungen:
- EP-A- 0 414 641
- DE-A- 3 439 418
- FR-A- 410 888
- US-A- 3 456 965

## Beschreibung

Die Erfindung betrifft eine Rohrleitung und Fixpunktbefestigung dieser Rohrleitung nach dem Oberbegriff des Anspruchs 1.

Eine Fixpunktbefestigung dieser Art ist aus der EP-B-0 414 641 bekannt. Die in die Rohrschelle eingelegte Schale ist hier eine Schweissmuffe, welche mit der Rohrleitung verschweisst ist. Diese Fixpunktbefestigung benötigt lediglich eine Rohrschelle und beansprucht weniger Raum als ebenfalls bekannte Fixpunktbefestigungen mit jeweils zwei im Abstand zueinander angeordneten Rohrschellen.

Bei Rohrleitungen aus Verbundrohren, die einen vergleichsweise kleinen Aussendurchmesser aufweisen, ist das Aufbringen einer Schweissmuffe jedoch schwierig.

Die FR-A-410 888 zeigt eine Fixpunktbefestigung, die gleichzeitig zwei Rohrenden verbindet. Damit die Verbindung dicht ist, ist an der Verbindungsstelle auf die Rohrenden eine Dichtungsmasse aufgetragen, welche von einer Bride umschlossen ist. Für Rohrleitungen aus Verbundrohren eignet sich diese Fixpunktbefestigung nicht.

Der Erfindung liegt die Aufgabe zugrunde, eine Fixpunktbefestigung der genannten Gattung zu schaffen, die sich für Rohrleitungen aus Verbundrohren besser eignet. Die Fixpunktbefestigung soll zudem einfacher montierbar und bei geringeren Herstellungskosten sicher sein.

Die Aufgabe ist bei einer gattungsgemässen Fixpunktbefestigung gemäss Kennzeichen des Anspruchs 1 gelöst. Eine formschlüssige Verbindung der Schale mit dem Flansch des Fittings kann auch bei den vergleichsweise kleinen Aussendurchmessern von Rohrleitungen aus Verbundrohren einfach und sicher realisiert werden. Die Schale ist so angeordnet, dass sie den verpressten Bereich des Verbundrohres überdeckt und aussenseitig wenigstens bereichsweise am Verbundrohr anliegt. Dadurch ist ein zusätzlicher Schutz der Pressverbindung erreicht.

Nach einer Weiterbildung der Erfindung besteht die Schale aus zwei Halbschalen, die über ein Filmscharnier miteinander verbunden sind. Eine solche Schale kann sehr einfach gehandhabt werden und lässt sich sehr kostengünstig als Spritzgussteil herstellen. Weist die Schale gemäss einer Weiterbildung der Erfindung aussenseitig eine Vertiefung auf, die im Querschnitt stufenförmig ist, so kann sie für Rohrschellen mit unterschiedlicher Breite verwendet werden. Weist die Schale zudem gegenüber dem Filmscharnier einen Schnappverschluss auf, so kann die Schale bei der Montage besonders einfach montiert werden. Die Schale eignet sich dann auch für eine Gleitbefestigung.

Weitere Vorteile ergeben sich aus den abhängigen Patentansprüchen, der nachfolgenden Beschreibung sowie der Zeichnung. Ein Ausführungsbeispiel der Erfindung wird nachfolgend anhand der Zeichnung näher erläutert. Es zeigen:
- Fig. 1: eine teilweise geschnittene Ansicht einer Fixpunktbefestigung sowie einer Gleitbefestigung,
- Fig. 2: schematisch die Montage einer erfindungsgemässen Fixpunktbefestigung,
- Fig. 3: eine Ansicht der Innenseite einer aufgeklappten Schale, und
- Fig. 4: einen Schnitt durch einen Teil der Schale gemäss Fig. 3.

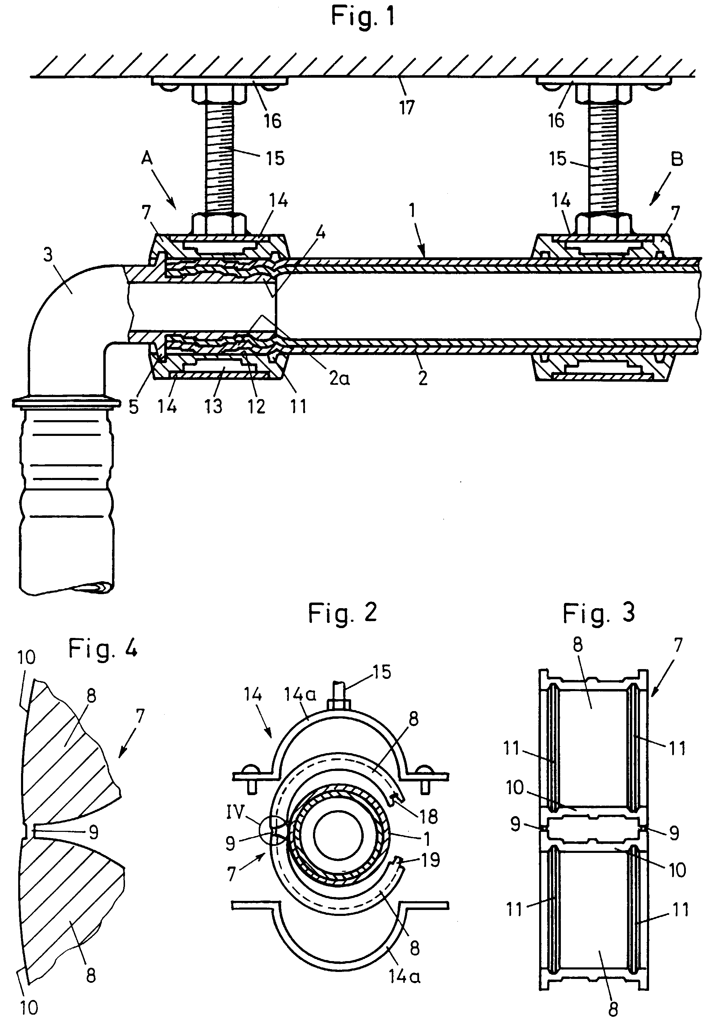

Die Fig. 1 zeigt einen Teil einer Wasserleitung 1 mit einem Verbundrohr 2 und einem Pressfitting 3. Das Verbundrohr 2 ist über einem Stutzen 4 des Pressfittings 3 in einem Bereich 2a verpresst und damit fest mit dem Fitting 3 verbunden. Die Herstellung einer solchen Pressverbindung ist dem Fachmann bekannt. Die Aussendurchmesser des Verbundrohres beträgt beispielsweise etwa 1,6 cm.

Die Rohrleitung 1 ist mit einer Fixpunktbefestigung A sowie einer Gleitbefestigung B an einer Gebäudewand 17 befestigt. Die Fixpunktbefestigung A hat die Aufgabe, thermische Ausdehnungen der Rohrleitung 1 gezielt in eine gewünschte Richtung zu lenken. Die Gleitbefestigung B erlaubt hingegen eine Verschiebung der Rohrleitung 1 in ihrer Längsrichtung. Die Befestigungen A und B weisen jeweils eine Rohrschelle 14 mit einem Rohrhalter 15 sowie eine Einlegeschale 7 auf. Die Rohrhalter 15 sind jeweils mittels einer Platte 16 an der Gebäudewand 17 verankert.

Wie die Figuren 2 und 3 zeigen, besteht die Schale 7 aus zwei halbkreisförmigen Schalen 8, die über Filmscharniere 9 klappbar miteinander verbunden sind. Die beiden Filmscharniere 9 bilden vergleichsweise schmale, im Abstand zueinander angeordnete Stege an der Aussenseite der Schale 7, wie insbesondere die Figuren 2 und 4 zeigen. Ineinandergreifende Teile 18 und 19 der beiden Schalen 8 bilden einen Schnappverschluss. Die Fig. 2 zeigt schematisch das Anbringen der Schale 7 an der Leitung 1. Um den Schnappverschluss zu schliessen, werden die beiden Schalenhälften 8 an die Leitung 1 angelegt, bis die Verschlussteile 18 und 19 ineinander eingreifen. Die Schale 7 bildet dann einen geschlossenen Ring, wobei im Bereich der Filmscharniere 9 Flächen 10 der beiden Halbschalen 8 aneinander anliegen können.

Zur Fixierung der Schale 7 an der Rohrleitung 1 ist diese an der verpressten Stelle 2a so um diese gelegt, dass eine innenseitige und umlaufende Nut 11 der Schale 7 einen radial sich nach aussen erstreckenden Flansch 5 des Fittings 3 umschliesst. Der Flansch 5 und die diesen umgreifende Nut 11 bilden eine formschlüssige Verbindung, die eine Verschiebung der Rohrleitung 1 in der Schale 7 verhindert.

In die Aussenseite der Einlegeschale 7 ist eine umlaufende Vertiefung 13 eingearbeitet, die im Querschnitt stufenförmig ausgebildet ist, wie die Fig. 1 deutlich zeigt. Diese Vertiefung 13 nimmt zwei Hälften 14a der Rohrschelle 14 auf. Die stufenförmige Ausbildung der Vertiefung 13 hat den Vorteil, dass diese auch für die Aufnahme unterschiedlich breiter Rohrschellen 14 geeignet ist. Die Stufen der Vertiefung sind selbstverständlich an die gängigen Breiten der für solche Befestigungen bekannten Rohrschellen angepasst. Die in die Vertiefung 13 eingelegte Rohrschelle 14 hält die beiden Hälften 8 der Schale 7 fest aneinander und presst sie gegen die verpresste Stelle 2a der Rohrleitung 1. Die stufenförmige Vertiefung 13 bildet zudem eine nicht zu vernachlässigende Materialersparnis. Vorzugsweise sind zwei im Abstand zueinander angeorndete Nuten 11 vorgesehen, denkbar ist jedoch auch eine Ausführung mit lediglich einer am Rand der Innenseite 12 der Schale 7 angebrachten Nut 11.

Die Schale 7 kann auch aus mehr als zwei Hälften 8 bestehen und auch fest mit der Rohrschelle 14 verbunden sein. Die Nuten 11 können auch durch irgendwelche Aussparungen oder Vorsprünge ersetzt sein, die geeignet sind, den Flansch 5 formschlüsssig aufzunehmen. Die Nuten 11 stellen hier lediglich die bevorzugten Mittel dar.

Wird nun die Schale 7 mit der Rohrschelle 14 ausserhalb des verpressten Bereichs 2a an das Verbundrohr 2 angelegt, so ist nach der Befestigung des Rohrhalters 15 an der Gebäudewand 17 eine Gleitbefestigung B realisiert. Weil hier der Eingriff mit dem Flansch 5 nicht besteht, kann die Rohrleitung 1 bei einer thermischen Ausdehnung in der Schale 7 axial gleiten. Da die Schale 7 mit ihrer ebenen Innenseite 12 flächig an der Aussenseite des Verbundrohres 2 anliegt, ist die Rohrleitung 1 in der Schale 7 verkantungsfrei geführt. Die Schale 7 eignet sich somit auch für eine Gleitbefestigung.

Bei der Montage wird die geöffnete Schale 7 an die Rohrleitung 1 angelegt und die Schnappverbindung 18, 19 geschlossen, worauf die Schale 7 provisorisch an der Rohrleitung 1 gehalten ist und im Fall einer Gleitbefestigung auf dem Verbundrohr 2 in die vorgesehene Position verschoben werden kann. Die Rohrleitung 1 wird nun mit der Rohrschelle 14 in an sich bekannter Weise an der Gebäudewand 17 befestigt. In der Regel wird eine Rohrleitung 1 mit mehreren Fixpunkt- und Gleitbefestigungen befestigt. Da für beide Befestigungsarten gleiche Teile verwendet werden können, ist die Montage und die Lagerhaltung besonders einfach.

## Patentansprüche

1. Rohrleitung und Fixpunktbefestigung dieser Rohrleitung (1) an einer Gebäudewand (17), mit einer Rohrschelle (14), in die eine Schale (7) eingelegt ist und die im Abstand zur Gebäudewand (17) die Rohrleitung (1) mit der eingelegten Schale (7) umgreift, dadurch gekennzeichnet, dass die Rohrleitung (1) einen Pressfitting (3) aufweist, an dem ein Verbundrohr (2) mit einer Pressverbindung befestigt ist und dass zur axialen Fixierung der Schale (7) an der Rohrleitung (1) die Schale (7) an der verpressten Stelle (2a) so um diese gelegt ist, dass eine innenseitige und umlaufende Nut (11) der Schale (7) einen radial sich nach aussen erstreckenden Flansch (5) des Pressfittings formschlüssig umschliesst, wobei die Schale (7) auch als Gleitbefestigung im Abstand zum Pressfitting (3) an die Rohrleitung (11) anlegbar ist.

2. Rohrleitung und Fixpunktbefestigung dieser Rohrleitung nach Anspruch 1, dadurch gekennzeichnet, dass die Schale (7) innenseitig zwei Nuten (11) aufweist, wobei der Flansch (5) in eine dieser beiden Nuten eingreift.

3. Rohrleitung und Fixpunktbefestigung dieser Rohrleitung nach Anspruch 1 oder 2, dadurch gekennzeichnet, dass die Nut (11) am Rand der Innenseite (12) der Schale (7) angeordnet ist.

4. Rohrleitung und Fixpunktbefestigung dieser Rohrleitung nach einem der Ansprüche 1 bis 3, dadurch gekennzeichnet, dass die Schale (7) an ihrer Aussenseite eine umlaufende Vertiefung (13) zur Aufnahme der Rohrschelle (14) aufweist.

5. Rohrleitung und Fixpunktbefestigung dieser Rohrleitung nach Anspruch 4, dadurch gekennzeichnet, dass die Vertiefung (13) im Querschnitt gesehen stufenförmig ist.

6. Rohrleitung und Fixpunktbefestigung dieser Rohrleitung nach einem der Ansprüche 1 bis 5, dadurch gekennzeichnet, dass die Schale (7) aus wenigstens zwei Teilen besteht.

7. Rohrleitung und Fixpunktbefestigung dieser Rohrleitung nach einem der Ansprüche 1 bis 6, dadurch gekennzeichnet, dass die Schale (7) aus zwei Hälften (8) besteht, die mit wenigstens einem Filmscharnier (9) miteinander verbunden sind.

8. Rohrleitung und Fixpunktbefestigung dieser Rohrleitung nach einem der Ansprüche 1 bis 7, dadurch gekennzeichnet, dass die Schale (7) mittels eines Schnappverschlusses (18,19) zu einem kreisförmigen Ring verbindbar ist.

## Claims

1. Pipeline and locating point fastening for this pipeline (1) on a building wall (17), having a pipe clamp (14), into which a shell (7) is inserted and which, at a distance from the building wall (17), engages around the pipeline (1) with the inserted shell (7), characterized in that the pipeline (1) has a press fitting (3), to which a composite pipe (2) with a press joint is fastened, and in that, for the purpose of axially fixing the shell (7) to the pipeline (1), the shell (7) at the compressed location (2a) is placed around the said pipeline such that an internal, encircling groove (11) of the shell (7) surrounds a flange (5), which extends radially outwards, of the press fitting in a positively locking manner, it also being possible to place the shell (7) against the pipeline (11) as a slide fastening at a distance from the press fitting (3).

2. Pipeline and locating point fastening for this pipeline according to Claim 1, characterized in that the shell (7) has two grooves (11) on the inside, the flange (5) engaging into one of these two grooves.

3. Pipeline and locating point fastening for this pipeline according to Claim 1 or 2, characterized in that the groove (11) is arranged at the edge of the inside (12) of the shell (7).

4. Pipeline and locating point fastening for this pipeline according to one of Claims 1 to 3, characterized in that the shell (7) has an encircling recess (13) on its outside, to accommodate the pipe clamp (14).

5. Pipeline and locating point fastening for this pipeline according to Claim 4, characterized in that the recess (13) is of step-like form, viewed in cross-section.

6. Pipeline and locating point fastening for this pipeline according to one of Claims 1 to 5, characterized in that the shell (7) comprises at least two parts.

7. Pipeline and locating point fastening for this pipeline according to one of Claims 1 to 6, characterized in that the shell (7) comprises two halves (8), which are connected to one another by means of at least one integral hinge (9).

8. Pipeline and locating point fastening for this pipeline according to one of Claims 1 to 7, characterized in that the shell (7) can be connected by means of a snap-in closure (18, 19) to form a circular ring.

## Revendications

1. Conduite tubulaire et dispositif de fixation à poste fixe de cette conduite tubulaire (1) sur un mur (17) d'un bâtiment, comportant un collier d'attache (14), qui est inséré dans une coque (7) et qui entoure, à distance du mur (17) du bâtiment, la conduite tubulaire (1) avec la coque (7) insérée, caractérisés en ce que la conduite tubulaire (1) comporte un raccord de serrage (3), auquel un tube de raccordement (2) est fixé selon une liaison à serrage, et que pour la fixation axiale de la coque (7) sur la conduite tubulaire (1), la coque (7) est disposée au niveau de la zone comprimée (2a) autour de cette dernière de telle sorte qu'une gorge circonférentielle intérieure (11) de la coque (7) entoure selon une liaison par formes complémentaires une bride (5), qui s'étend radialement vers l'extérieur, du raccord à serrage, la coque (7) pouvant être également appliquée en tant que dispositif de fixation coulissant, à distance du raccord à serrage (3), sur la conduite tubulaire (11).

2. Conduite tubulaire et dispositif de fixation à poste fixe de cette conduite tubulaire selon la revendication 1, caractérisés en ce que la coque (7) comporte deux gorges (11), sur son côté intérieur, la bride (5) s'engageant dans l'une de ces deux gorges.

3. Conduite tubulaire et dispositif de fixation à poste fixe de cette conduite tubulaire selon les revendications 1 ou 2, caractérisés en ce que la gorge (11) est disposée sur le bord du côté intérieur (12) de la coque (7).

4. Conduite tubulaire et dispositif de fixation à poste fixe de cette conduite tubulaire selon l'une des revendications 1 à 3, caractérisés en ce que la coque (7) comporte, sur sa face extérieure, un renfoncement circonférentiel (13) servant à loger le collier d'attache (14).

5. Conduite tubulaire et dispositif de fixation à poste fixe de cette conduite tubulaire selon la revendication 4, caractérisés en ce que le renfoncement (13) possède une forme étagée en coupe transversale.

6. Conduite tubulaire et dispositif de fixation à poste fixe de cette conduite tubulaire selon l'une des revendications 1 à 5, caractérisés en ce que la coque (7) est formée d'au moins deux parties.

7. Conduite tubulaire et dispositif de fixation à poste fixe de cette conduite tubulaire selon l'une des revendications 1 à 6, caractérisés en ce que la coque (7) est formée de deux moitiés (8) qui sont reliées entre elles par au moins une charnière formée d'un film (9).

8. Conduite tubulaire et dispositif de fixation à poste fixe de cette conduite tubulaire selon l'une des revendications 1 à 7, caractérisés en ce que la coque (7) peut être réunie au moyen d'un système de fermeture à encliquetage (18,19) pour former un anneau circulaire.
